Europäisches Patentamt

European Patent Office

Office européen des brevets

(11) Publication number: **0 058 040**
**A1**

# (12) EUROPEAN PATENT APPLICATION

(21) Application number: **82300528.5**

(22) Date of filing: **02.02.82**

(51) Int. Cl.³: **B 65 G 15/08**
**B 65 G 15/60**

(30) Priority: **09.02.81 IL 62091**

(43) Date of publication of application:
**18.08.82 Bulletin 82/33**

(84) Designated Contracting States:
**BE DE FR GB IT NL SE**

(71) Applicant: **Furman, Vladimir**
**Maaleh Knaan 266/5**
**Safed(IL)**

(72) Inventor: **Furman, Vladimir**
**Maaleh Knaan 266/5**
**Safed(IL)**

(74) Representative: **Simpson, Ronald Duncan Innes et al,**
**A.A.Thornton & Co. Northumberland House 303-306**
**High Holborn**
**London WC1V 7LE(GB)**

(54) Installation for the transportation of bulk material between a shore and an offshore naval vessel.

(57) Installations for loading and unloading naval vessels anchored offshore. Each installation comprises in combination:

i) a shore station (1) and an offshore station (2), one serving for loading (loading station) and the other for unloading (unloading station);

ii) at least one endless conveyor belt (4) travelling across the sea between said stations forming a loop at either station and adapted to be transformed when loaded into a tubular state and to float in such state;

iii) locking means (20, 21) at the edges of edges of each of said conveyor belt adapted to interlock when forced against each other;

iv) means (7) associated with each conveyor belt at the loading station for loading bulk material thereon;

v) further means (25-35) associated with each conveyor belt at the loading station for causing the loaded conveyor belt to fold over and said locking means to interlock thereby to transform the conveyor belt into a tubular state (4") (transformation assembly of the first kind);

vi) means (44, 45) associated with each conveyor belt at the unloading station for unlocking said locking means and opening and flattening the conveyor belt thereby to transform the conveyor belt into a flattened state (4') (transformation assembly of the second kind); and

vii) further means (46, 47) associated with each conveyor belt at the unloading station for receiving dumped-off bulk material.

By means of such installations loading and unloading can be effected near the site from where the loaded bulk is obtained, e.g. a mine, or near the site where the unloaded bulk is required, e.g. a power station. In this way the construction of expensive harbours can be avoided and transportation costs are reduced.

EP 0 058 040 A1

./...

*Fig. 1*

1

Installation for the Transportation of Bulk
Material between a Shore and an Offshore
Naval Vessel

The present invention concerns an installation for
the transportation of bulk material between a location on
a shore and a naval vessel anchoring offshore.

The need for the loading and unloading of bulk material
onto and from naval vessels anchoring offshore has recently
become ever more pressing. For example, in view of the
energy crisis due to the ever increasing price of mineral
oil, new power stations are being erected operating on coal.
Such stations are usually erected on the seaside in order to
utilize sea water for cooling, and for ecological considerations out as far as possible from densely populated areas.
Many of the countries that build coal-operated power
stations do not have any coal of their own and have to
import it by sea from abroad and obviously it is preferred
that the coal should be brought directly to the site of the power station without the need for any intermediary land transportation. For considerations of costs and ecology it is required that the unloading of coal from the ships should be effected offshore. Hitherto, the designers have met this requirement by erecting long piers leading from the site of the power station to a desired distance offshore where it is safe for coal freighters to anchor, and obviously the larger the freighters that are to be used the longer the pier has to be. Experience has shown that the building of a long pier extending deep into open sea to a location where it is safe for the large-size freighters to anchor is an expensive operation, which in the absence of a natural harbour may also be hazardous. Such, for example, is the case at the site of the new power station at Hadera, Israel, which is now under construction. Furthermore, the docking of freighters near piers in mid-sea and the unloading of freight becomes impossible at rought sea conditions which in many locations, such as at the Hadera site, is liable to occur during 30% of the time or even more. However, so far designers have been looking in vain for a cheaper, safer and more reliable means for the offshore unloading of coal.

Similar problems arise for loading coal. Here too, for considerations of ecology it is desired to load the coal outside of large multipurpose harbours from a shore station outside populated areas onto freighters that anchor offshore.

Similar problems arise with other bulk material such as ores of various kinds, e.g. phosphate rock, iron ores, bauxite, various calcareous rocks, and the like which for reasons of convenience and ecology it is desired to load onto ships or unload from ships that are anchored offshore.

It is thus the object of the present invention to provide a new installation for solving all these problems.

In accordance with the invention there is provided an installation for the transportation of bulk material between a shore and an offshore naval vessel, comprising:

    i)   a shore station and an offshore station, one serving for loading (loading station) and the other for unloading (unloading station);

    ii)   at least one endless conveyor belt, travelling across the sea between said stations forming a loop at either station and adapted to be transformed when loaded into a tubular state and to float in such state;

    iii)   locking means at the edges of each of said conveyor belt adapted to interlock when forced against each other;

    iv)   means associated with each conveyor belt at the loading station for loading bulk material thereon;

    v)   further means associated with each conveyor belt at the loading station for causing the loaded conveyor belt to fold over and said locking means to interlock thereby to transform the conveyor belt into a tubular state (transformation assembly of the first kind);

vi)   means associated with each conveyor belt at the unloading station for unlocking said locking means andopening and flattening the conveyor belt thereby to transform the conveyor belt into a flattened state (transformation assembly of the second kind);

and

vii)   further means associated with each conveyor belt at the unloading station for receiving dumped-off bulk material.

As a rule, an installation according to the invention will comprise a number of conveyor belts running in parallel and designed for simultaneous or selective operation, as may be required.

In accordance with one embodiment of the invention, each conveyor belt is designed either for loading or unloading a naval vessel. When the design is for loading the shore station is the loading station and comprises a transformation assembly of the first kind, and the offshore station is the unloading station and comprises a transformation assembly of the second kind. When the design is for unloading a naval vessel the offshore station is the loading station and comprises a transformation assembly of the first kind and the shore station is the unloading station and comprises a transformation assembly of the second kind.

5

In accordance with another embodiment of the invention either of said shore and offshore stations is fitted in association with each conveyor belt with both transformation assemblies of the first and second kind for alternative use, and in this way each conveyor belt may be used for either loading or unloading a naval vessel, as may be required.

In accordance with the invention the offshore station may be fixed or movable. A fixed station may be installed on a platform resting on a plurality of poles or legs, e.g. of the kind that is used for offshore oil drilling. A movable station may be located on a floating vessel, e.g. a barge and has the advantage that it can serve sequentially several ships without that the latter have to move.

In operation, the loaded part of the conveyor belt that is in a tubular state floats on the water across the stretch of sea between the shore and offshore stations. The unloaded part of the conveyor belt that is in a flat state travels submerged underneath the loaded part and in opposite direction.

The invention is illustrated, by way of example only, in the accompanying drawings in which:

Fig. 1 is a perspective view of an installation according to the invention;

Fig. 2 is a perspective view of the offshore station in the installation of Fig. 1, drawn to a larger scale;

Fig. 3 shows the loop portion of a conveyor belt at the offshore station of Fig. 2, drawn to a larger scale;

Fig. 4 shows a detail of the loop;

Fig. 5 shows the interlocking edges of the conveyor belt of Fig. 3;

Figs. 6-11 are details of the transformation means of the first kind associated with the offshore end of the conveyor belt shown in Fig. 3, all drawn to a larger scale;

Fig. 12 shows the loaded conveyor belt in its floating tubular state;

Fig. 13 shows to a larger scale the interlock between the two edges of the conveyor belt;

Fig. 14 is a fragmentary perspective view of the shore station of the installation of Fig. 1, drawn to a larger scale;

Fig. 15 shows the loop portion of the conveyor belt of Fig. 14, drawn to a larger scale; and

Figs. 16-19 show details of the transformation means of the second kind associated with the shore end of the conveyor belt shown in Fig. 15, all drawn to a larger scale.

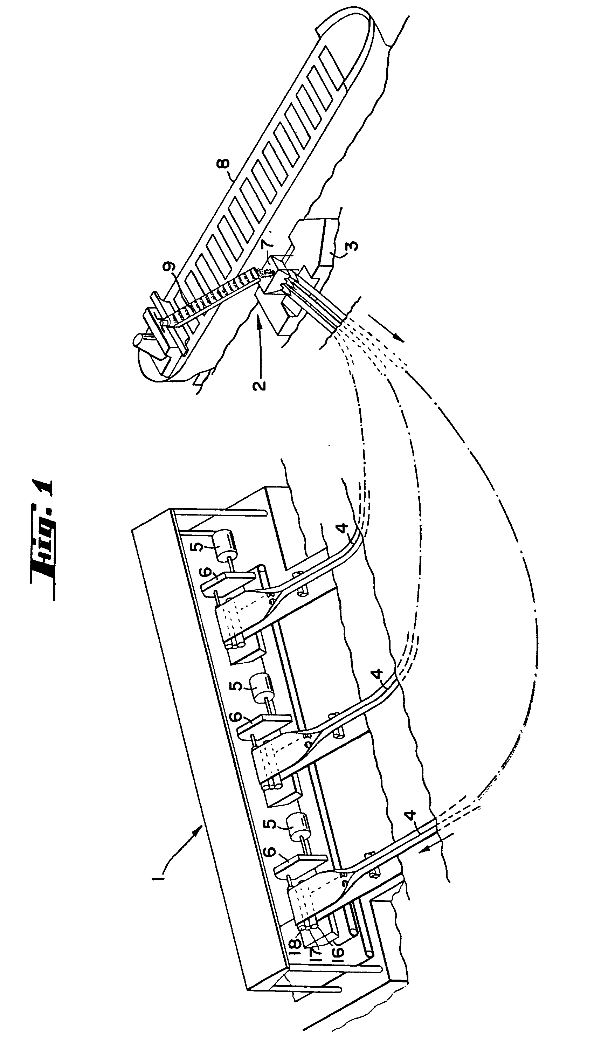

The installation according to the invention shown in Fig. 1 comprises a shore station 1, an offshore station 2 located on a barge 3 and three identical endless conveyor belts 4 forming a loop at each station and travelling between stations 1 and 2 across the open sea such that the conveyor belt is in a loaded, tubular state 4" on the leg between the offshore station 2 to the shore station 1 and in an unloaded flat state 4' on the leg from shore station 1 to offshore station 2. For reasons of convenience of illustration, the shore and offshore stations are shown in two different perspectives and the conveyor belts are partly broken away. In actual practice, the conveyor belts extend straightly between the stations.

The shore station 1 comprises associated with each conveyor belt 4 a driving motor 5 and transmission means 6. The motors 5 may be operated simultaneously or selectively as may be required. The offshore station 2 comprises a hopper 7 through which bulk material is dumped onto the conveyor belts 4. As is further seen in Fig. 1, a ship 8 is anchored close to the barge 3 and the bulk material arriving from the interior of the ship is dumped into hopper 7 through a chute 9.

The offshore station 2 is more closely illustrated in Fig. 2. As shown, hopper 7 is designed for the distribution of the bulk material arriving through chute 9 between the three conveyor belts 4. To this end there are provided internal partitions 10 subdividing the hopper into three compartments each terminating with an outlet 11 associated with one of the conveyor belts 4.

At the offshore station 2 there is associated with each conveyor belt 4 a driving motor 12, transmission means 13, and a clutch 14. Thus each conveyor belt is driven at both loops by motors 5 and 12 through respectively transmission means 6 and 13. Preferably, each pair of motors 5 and 12 associated with one and the same conveyor belts 4 are synchronized.

There is further associated with each conveyor belt 4 at the offshore station 2 a transformation assembly of the first kind for transforming the conveyor belt from the flattened state 4' into the tubular state 4''. Each transformation assembly of the first kind is symbolized in Fig. 2 by a pair of idler rollers 15 and such an assembly will be described in more detail further below. As follows from Figs. 1 and 2, each conveyor belt arrives at the offshore station 2 from the shore station 1 through the stretch of open sea between them in the flattened state 4' and returns from the offshore station 2 to the shore station 1, again through the stretch of open sea between them by floating in the tubular state 4''.

Each of the transformation assemblies of the first and second kind consists of a plurality of idler rollers and wheels serving as guides. They are suitably shaped and positioned so as to fold the conveyor belts into a tubular state and cause the two edges to interlock in case of transformation assembly of the first kind, and to tear it open and cause it to flatten out in case of a transformation assembly of the second kind. The rollers and wheels of the transformation assemblies of either kind are mounted on a framework installed overhead the associated conveyor belt near the loop portion thereof. For simplicity of illustration, said frameworks are not illustrated in the drawings which merely show the rollers and wheels as such.

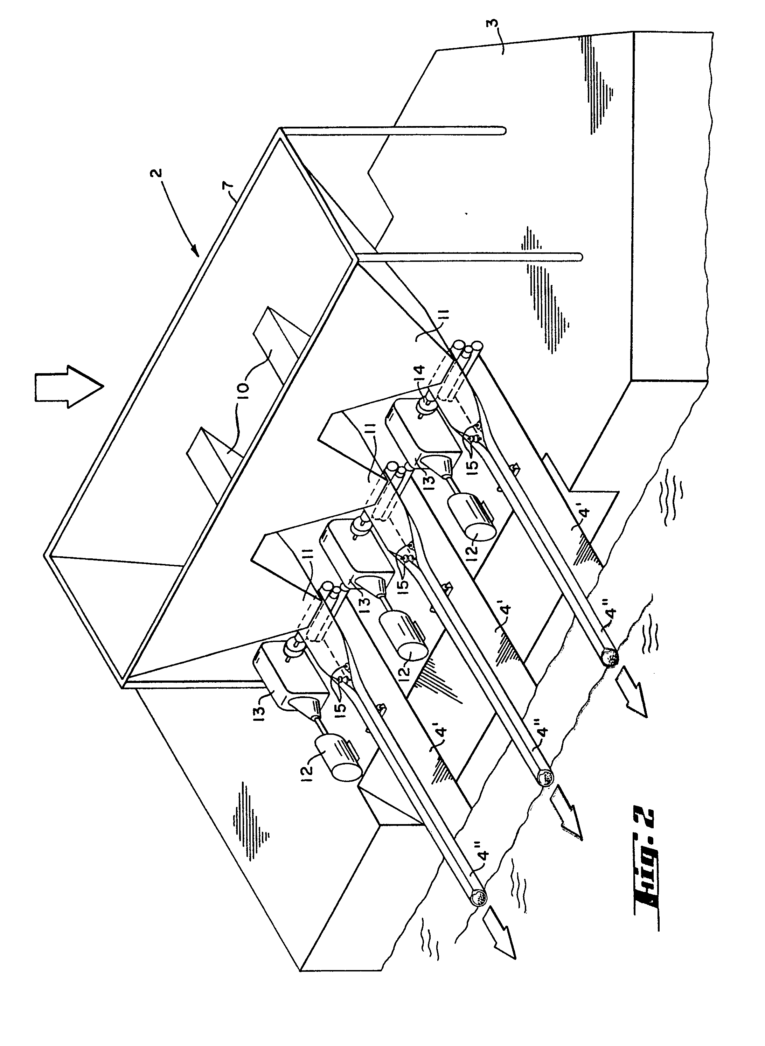

The offshore loop portion of a conveyor belt 4 serving for loading the conveyor (unloading a ship) is shown in Fig. 3. As shown, the conveyor belt arriving in the flattened state 4' from the shore station forms a loop over and between rollers 16, 17 and 18, the latter being driven by the associated motor 12 through transmission means 13 and clutch 14. The upper, still flattened part of the loop receives bulk material (not shown) that is dumped from an associated outlet 11 of hopper 7. The so-loaded conveyor belt 4 is then folded over into the tubular state 4''. As seen in Fig. 4, the end portions of roller 17 are profiled so as to receive the profiled edges of the conveyor belt 4. These edges are more closely illustrated in Fig. 5 and it can be seen that one of them has a male profile 20 and the other a female profile 21, said profiles 20, 21 being adapted for tight interlock.

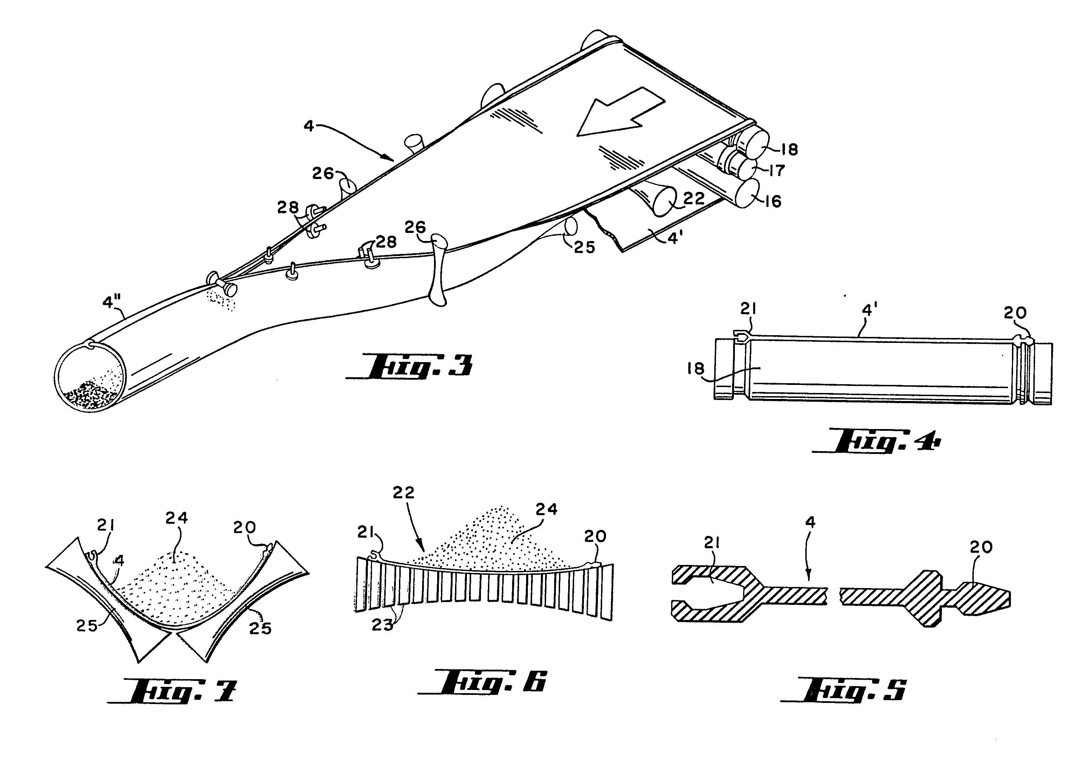

The transformation assembly of the first kind associated with the loop portion of conveyor belt 4 shown in Fig. 3 comprises a plurality of idler rollers and wheels of different shapes and sizes as shown in Figs. 6-11. The first part of the transformation assembly is shown in Fig. 6 and it consists of a set 22 of idler wheels 23 whose diameters decrease symmetrically from the flank to the centre such that the conveyor belt 4 resting thereon is caved so as to better hold the dumped-on bulk material 24. There then follows a pair of inclined idler rollers 25 as shown in Fig. 7. Rollers 25 have each a caved-in shape so that between them they induce further sagging of the conveyor belt 4 as shown in Fig. 7.

Next there follow three idler rollers 26 shown in Fig. 8. Rollers 26 are of similar shape as rollers 25 in Fig. 5 and as is shown one of them extends transversely and serves as support, while the two flanking rollers 26 are mounted vertically, so that the three rollers 26 form between them an essentially U-shaped assembly. Due to this the conveyor belt 4 passing through roller 26 also assumes a U-shaped profile.

There then follows the assembly shown in Fig. 9. It comprises below a transversal roller 27 of similar shape and design as roller 26 in Fig. 8 and again serving as support. In addition, there are provided four overhead idler wheels 28 arranged in pairs, each pair being suspended from one side of a V-shaped bracket 29, the arrangement being such that each pair of wheels 28 grips one of the two edges of the conveyor belt 4.

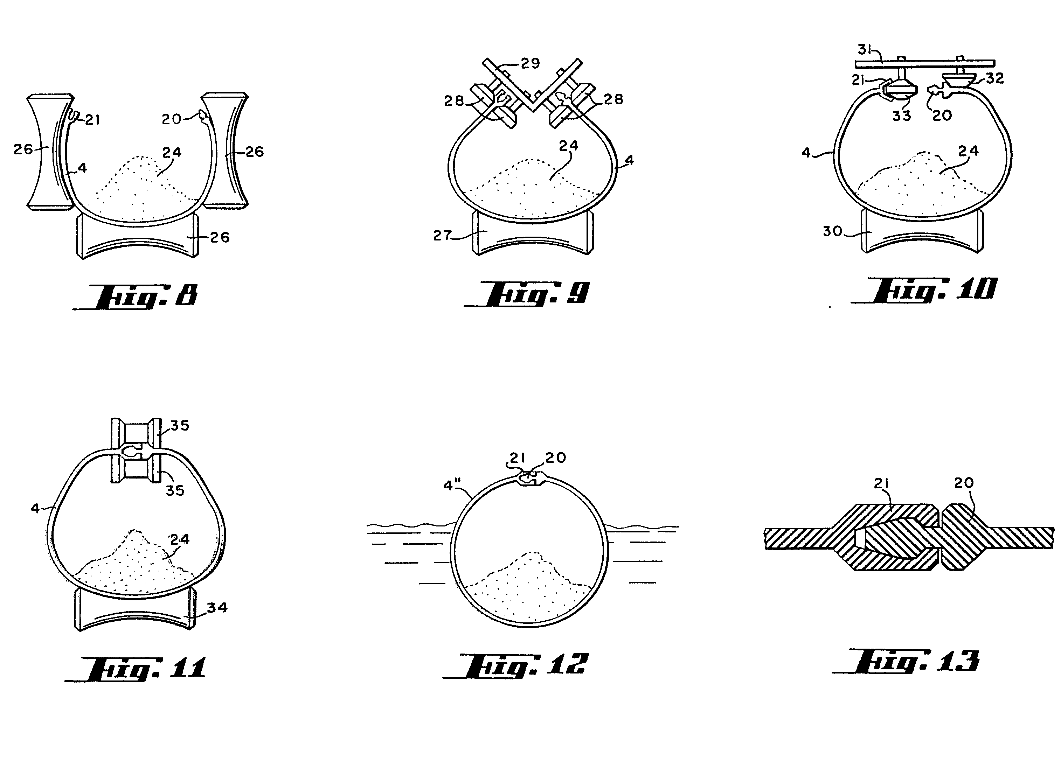

There then follows the assembly shown in Fig. 10. This assembly again comprises a lower, transversal idler roller 30 of similar shape and design as rollers 26 and 27 of, respectively, Figs. 8 and 9 and again serving as support. In addition, there are provided two differently shaped overhead idler wheels depending from a flat bracket 31. The first of these, wheel 32, has a truncated conical shape and is adapted to guide the male profiled edge 20 of conveyor belt 4 into a horizontal position. The other wheel 33 is of double truncated conical shape and is adapted to penetrate into a portion of the female edge 21 of conveyor belt 4 so as to widen it and place it exactly opposite the male portion 20.

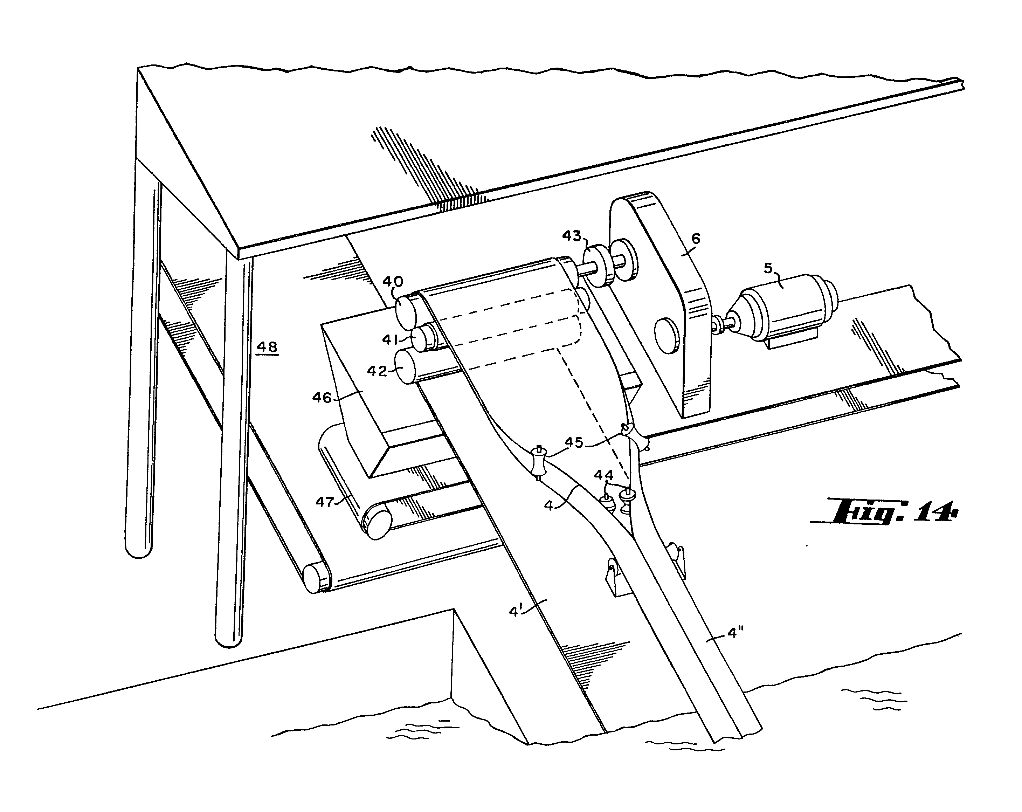

From the position shown in Fig. 10 the two edges 20 and 21 of the conveyor belt 4 snap into mutual engagement. There results an interlock as shown in Fig. 11. There is also shown in that figure a pair of rollers 35 for pressing the edge portions 20, 21 of the conveyor belt 4 into a tight interlock, while a transversal idler roller 34 of similar size and shape as rollers 26, 27 and 30 shown, respectively, in Figs. 8, 9 and 10, affords support from below. When leaving this last assembly the loaded conveyor belt 4 assumes a fully tubular shape 4'' and floats on the water as shown in Fig. 12.

Fig. 13 shows to a larger scale the interlock between edges 20 and 21 of the conveyor belt 4.

Fig. 14 shows the delivery loop of a conveyor belt 4 at the shore station 1. As shown, the conveyor belt in its tubular state 4'' gradually opens and is transformed into the flattened state 4' in which it returns submerged to the offshore station 2. The loop end of the conveyor belt passes over and between rollers 40, 41, 42, the former of which is directly driven by motor 5 via transmission means 6 and a clutch 43. The transformation assembly of the second kind is here symbolized by pairs of rollers 44 and 45 and will be described in more detail further below.

Underneath the shore loop of the conveyor belt there is provided a hopper 46 which directs the dumped-off bulk material onto a transversal conveyor belt 47 from where the material is dumped on a further conveyor belt 48 which delivers the bulk material for further disposal.

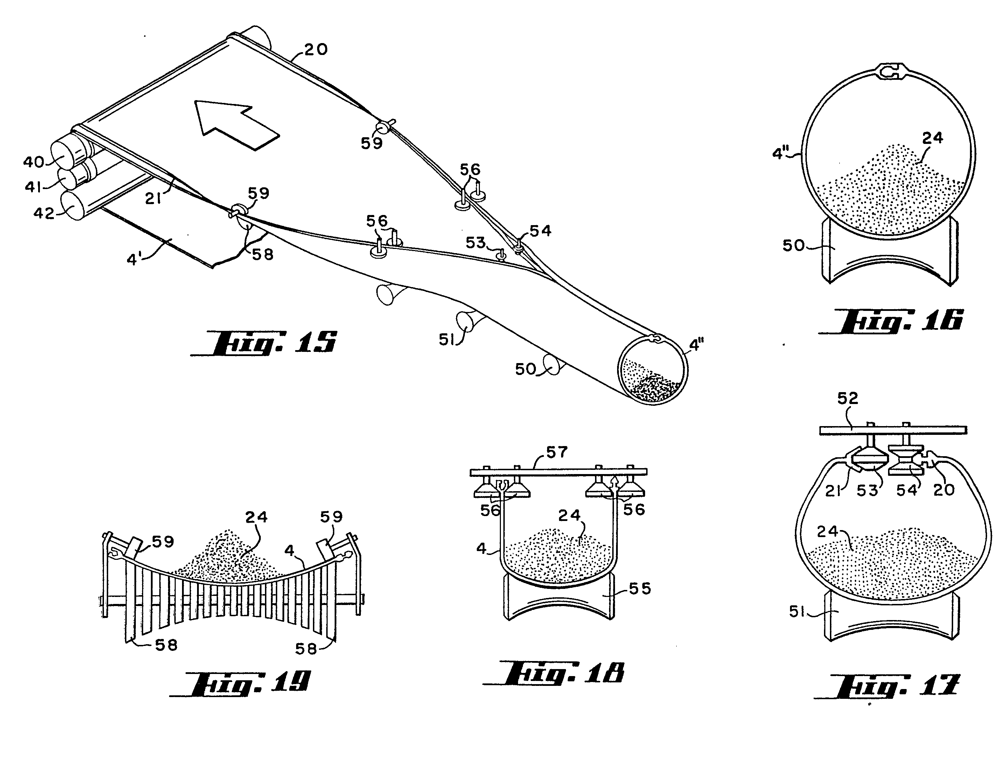

The delivery loop of the conveyor belt is shown more closely in Fig. 15 and it is seen there how it transforms from the tubular state 4'' into the fully flattened state 4' passing on its way over and between rollers 40, 41, 42. .

As shown in Fig. 16, the arriving conveyor belt 4 in the tubular state 4'' is stabilized by a supporting idler roller 50 of similar shape and size as rollers 26, 27, 30 and 34 of, respectively, Figs. 8, 9, 10 and 11. There then follows an unlocking assembly shown in Fig. 17. It comprises another similar supporting roller 51 and, suspended from a bracket 52 an overhead idler wheel 53 of double conical shape adapted for penetration into the female edge 21 of conveyor belt 4, and a grooved wheel 54 adapted to receive the male edge 20 of the conveyor belt.

There then follows an assembly comprising yet another supporting idler roller 55 similar to rollers 50 and 51, and four overhead frusto-conically shaped idler wheels 56 suspended pairwise from a bracket 57 such that each pair engages between it an edge portion of the conveyor belt 4 so as to spread the conveyor belt further open into an essentially U-shaped profile.

Next follows an assembly shown in Fig. 19. It comprises below conveyor belt 4 a plurality of idler wheels 58 whose diameter diminishes symmetrically from the flanks to the centre, similar as the set of wheels 23 in Fig. 6. The assembly further comprises a pair of upper rollers 59 which press the conveyor belt 4 from above and thereby ensure a further flattening thereof as shown in Fig. 19.

From the position of Fig. 19 the conveyor belt 4 flattens out spontaneously due to its resilience and when it reaches the loop end, bulk material 24 is dumped onto conveyor belt 47 and from there onto conveyor belt 48. The flattened portion 4' of the conveyor belt 4 returns submerged in the water to the offshore station 2.

From the foregoing description it is easily understood that the installation according to the invention will work in the same way for loading ships and in this case the shore station will serve for dumping bulk material onto the conveyor belt and will comprise trasnformation assemblies of the first kind while the offshore station will serve for unloading and will comprise transformation assemblies of the second kind. It is furthermore easily understood that at either station there may be provided in association with each conveyor belt 4 two sets of transformation assemblies, one of the first kind and the other of the second kind, for alternative use. In this way the assembly can be used either for loading or unloading, as may be required.

In the alternative, it is also possible to arrange the installation in such a way that out of a plurality of conveyor belts some will serve permanently for loading and others permanently for unloading and these two kinds will be used alternatively or simultaneously as may be required.

CLAIMS

1.    An installation for the transportation of bulk material between a shore and an offshore naval vessel, characterised by:

    i)    a shore station (1) and an offshore station (2), one serving for loading (loading station) and the other for unloading (unloading station);

    ii)    at least one endless conveyor belt (4) travelling across the sea between said stations forming a loop at either station and adapted to be transformed when loaded into a tubular state and to float in such state;

    iii)    locking means (20,21) at the edges of each of said conveyor belt adapted to interlock when forced against each other;

    iv)    means (7) associated with each conveyor belt at the loading station for loading bulk material thereon;

    v)    further means (25-35) associated with each conveyor belt at the loading station for causing the loaded conveyor belt to fold over and said locking means to interlock thereby to transform the conveyor belt into a tubular state (4") (transformation assembly of the first kind);

    vi)    means (44,45) associated with each conveyor belt at the unloading station for unlocking said locking means and opening and flattening the conveyor belt thereby to transform the conveyor belt into a flattened state (4') (transformation assembly of the second kind); and

vii)     further means (46,47) associated with each conveyor belt at the unloading station for receiving dumped-off bulk material.

2.    An installation according to Claim 1, wherein the conveyor belts are designed for loading a naval vessel, said shore station being the loading station and comprising in association with each conveyor belt a transformation assembly of the first kind, and said offshore station being the unloading station and comprising in association with each conveyor belt a transformation assembly of the second kind.

3.    An installation according to Claim 1, wherein the conveyor belts are designed for unloading a naval vessel, said offshore station (2) being the loading station and comprising in association with each conveyor belt a transformation assembly (25-35) of the first kind, and said shore station (1) being the unloading station and comprising in association with each conveyor belt a transformation assembly of the second kind.

4.    An installation according to Claim 1 comprising a plurality of conveyor belts at least one of which is designed for loading a naval vessel and is designed as in Claim 2, and at least one of which is designed for unloading a naval vessel and is designed as in Claim 3.

5.    An installation according to Claim 1, wherein either of said shore and offshore station is fitted in association with each conveyor belt with both transformation assemblies of the first and second kind for alternative use, each conveyor belt being thereby adapted for optional loading and unloading of a naval vessel.

Fig. 1

Fig. 2

0058040

0058040

**Fig. 4**

**Fig. 5**

**Fig. 3**

**Fig. 6**

**Fig. 7**

Fig. 8 — Fig. 9 — Fig. 10 — Fig. 11 — Fig. 12 — Fig. 13

0058040

Fig. 14.

**Fig. 15**

**Fig. 16**

**Fig. 19**

**Fig. 18**

**Fig. 17**

6/6

0058040

0058040

European Patent Office

**EUROPEAN SEARCH REPORT**

Application number

EP 82 30 0528

## DOCUMENTS CONSIDERED TO BE RELEVANT

| Category | Citation of document with indication, where appropriate, of relevant passages | Relevant to claim |
|---|---|---|
| A | FR - A - 2 025 303 (BAUD L.)<br>* Page 1, line 15 to page 4, line 115 * | 1,3 |
| A | DE - A - 2 054 568 (BAHKE)<br>* Claim 1 and page 5, lines 7-31 * | 1,2,4, 5 |
| A | GB - A - 709 701 (BULK PRODUCTS LTD) | 1 |
| A | FR - A - 1 565 816 (C. SCHOLTZ AG) | 1 |

**CLASSIFICATION OF THE APPLICATION (Int. Cl. 3)**

B 65 G 15/08
15/60

**TECHNICAL FIELDS SEARCHED (Int.Cl. 3)**

B 65 G
E 02 F

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on. or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 06-05-1982 | VAN ROLLEGHEM |

EPO Form 1503.1 06.78